# EUROPÄISCHE PATENTSCHRIFT

(11) **EP 2 906 642 B1**
(45) Veröffentlichungstag und Bekanntmachung des Hinweises auf die Patenterteilung: **31.08.2016**
(21) Anmeldenummer: 13758758.0
(22) Anmeldetag: 04.09.2013
(51) Int. Cl.: C09D 11/037

(54) **PHOSPHORSÄUREESTER ENTHALTENDE, BINDEMITTELFREIE PIGMENTPRÄPARATIONEN**
BINDING AGENT FREE-PIGMENT PREPARATIONS CONTAINING PHOSPHORIC ACID ESTER
PRÉPARATIONS PIGMENTAIRES EXEMPTES DE LIANT, CONTENANT DES ESTERS D'ACIDE PHOSPHORIQUE

(30) Priorität: 09.10.2012 DE 102012019788
(43) Veröffentlichungstag der Anmeldung: 19.08.2015
(73) Patentinhaber: CLARIANT INTERNATIONAL LTD, 4132 Muttenz (CH)
(72) Erfinder: AHRENS, Hendrik, 65830 Kriftel (DE)
(74) Vertreter: Mikulecky, Klaus
(86) Internationale Anmeldenummer: PCT/EP2013/002651
(87) Internationale Veröffentlichungsnummer: WO 2014/056562

(56) Entgegenhaltungen:
- EP-A1- 0 393 579
- WO-A1-85/00614
- DE-A1- 10 227 657
- DE-A1- 19 728 856
- GB-A- 2 053 258

## Beschreibung

Gegenstand der vorliegenden Erfindung sind wässrige, bindemittelfreie Pigmentpräparationen, die Phosphorsäureester als Dispergiermittel enthalten, sowie ihre Verwendung zum Färben von makromolekularen Materialien aller Art, wie beispielsweise Fasermaterialien, Papiermassefärbung, Beschichtungsstoffe, Lacke, Farben und ihre Verwendung zum Bedrucken von zweidimensionalen Flächengebilden wie beispielsweise Papier, Kartonagen, Kunststoff, Textilien und Leder.

Für das Einfärben von makromolekularen Materialien, insbesondere von Farben und Lacken werden wässrige, bindemittelfreie Pigmentpräparationen mit organischen oder anorganischen Pigmenten hergestellt. Diese Pigmentpräparationen kommen als Abtönpasten in Baumärkten und Malerfachgeschäften zum Einsatz und werden mit Hilfe von Dosier- und Abtönanlagen wässrigen und lösemittelhaltigen Farben und Lacken zugesetzt, um Kundenwünschen entsprechende Farbtöne einzustellen. Üblicherweise enthalten Abtönpasten Pigmentkonzentrationen in einem breiten Konzentrationsbereich von 1 bis 75 Massen-%.

Obwohl nach dem Stand der Technik eine Vielzahl von Verbindungen als geeignete Netz- und Dispergiermittel vorgeschlagen werden, fehlt es in der Praxis immer wieder an effektiven Dispergiermitteln für Pigmentdispersionen, die den Anforderungen an Sedimentationsstabilität, rheologisches Verhalten, Farbausbeute der Pigmente und an ein geringes human- und ökotoxikologisches Verhalten genügen. Darüber hinaus schränken Vergaberichtlinien für Umweltsiegel die Verwendung bekannter Netz- und Dispergierhilfsmittel ein, so dass der Fachmann immer wieder auf der Suche nach neuen Dispergiermitteln und Kombinationen ist, um flüssige, stabile, wässrige Pigmentpräparationen herzustellen.

Der vorliegenden Erfindung lag die Aufgabe zugrunde, stabile und fließfähige, Alkylphenol-freie wässrige Pigmentpräparationen herzustellen, die über einen längeren Zeitraum keine Sedimentation der verwendeten Pigmente aufzeigen, und mit denen sich wässrige und lösemittelhaltige Farben, Lacke und Lasuren gleichermaßen einfärben lassen. Beim Abtönen von wässrigen Lacken und Farben, insbesondere Dispersionsfarben, Silikatdispersionsfarben und wässrigen Silikonharzfarben sollten die erfindungsgemäßen Pigmentpräparationen keine Rubout-Probleme zeigen.

Weiterhin sollen die wässrigen Pigmentpräparationen auch mit lösemittelhaltigen Lacken kompatibel sein, sich homogen durch Mischen, Rühren oder Schütteln im Lack verteilen lassen und bei Streiche oder Rolle auf Oberflächen ein ruhiges, gleichmäßiges Farbbild ergeben. Auch für die Kompatibilität der wässrigen Pigmentpräparationen dient der Rubout-Test, der in der in US-3840383 beschriebenen Weise durchgeführt wird.

DE-3914384 lehrt Pigmentzubereitungen enthaltend
(A) ein feinteiliges Pigment,
(B) 1 bis 20 Gew.-% - bezogen auf die Zubereitung - mindestens eines Farbmittels, das mindestens eine externe basische Gruppe aufweist,
(C) 3 bis 30 Gew.-% - bezogen auf die Zubereitung - mindestens eines Phosphorsäureesters aus der Gruppe Dialkyl-, Trialkyl-, Diaryl-, Triaryl-, Alkylarylphosphorsäureester oder der Gruppe der sauren oder neutralen Phosphorsäureester auf der Basis Fettalkohol-Ethylenoxid-Addukte, Fettalkohol-Propylenoxid-Addukte, Polypropylenglykol, Polyethylenglykol oder von Blockcopolymeren auf der Basis Propylenoxid und Ethylenoxid und
(D) gegebenenfalls in Pigmentzubereitungen weitere übliche Hilfsmittel.

DE-A-3627023 lehrt eine Pigmentdispersion, bestehend aus
(A) 10 bis 80 Gew.-% eines Pigments,
(B) 2 bis 20 Gew.-% eines oder mehrerer Alkylglykolethersulfate der allgemeinen Formel (I)

   R¹-O-(CH₂CH₂-O-)ₘSO₃M (I)

   worin
   - R¹: für einen Alkyl- oder Alkenylrest mit 6 bis 28 C-Atomen,
   - m: für eine ganze Zahl von 1 bis 20 und
   - M: für ein physiologisch unbedenkliches Kation,
(C) 0,1 bis 10 Gew.-% eines oder mehrerer Phosphorsäureester der allgemeinen Formel (II) 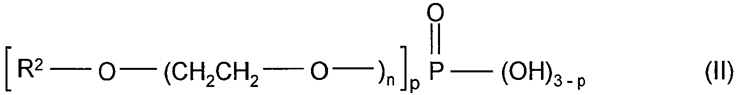 worin
   - R²: unabhängig voneinander jeweils für einen Alky- oder Alkenylrest mit 4 bis 28 C-Atomen,
   - n: unabhängig voneinander jeweils für eine ganze Zahl von 0 bis 10 und
   - p: für eine ganze Zahl von 1 bis 3 stehen.
(D) 0 bis 60 Gew.-% eines physiologisch unbedenklichen Wasserrückhaltemittels,
(E) 0 bis 5 Gew.-% üblicher Zusatzstoffe und
(F) 0 bis 80 Gew.-% Wasser,
wobei die summe der enthaltenen Bestandteile (A), (B), (C), (D), (E) und (F) 100 Gew.-% der Dispersion beträgt.

US-4456485 lehrt, dass leicht dispergierbare Alkalimetall-Pigmente mit hoher Farbstärke erzielt werden, wenn das Pigment in der Gegenwart von
(A) primären, sekundären oder tertiären aliphatischen Aminen,
(B) N-alkylamino Alkansäure,
(C) Diaryl-oder Triarylamine,
(D) saure oder neutrale aliphatische Ester von Phosphorsäure,
(E) Halbester der Schwefelsäure mit Fettalkoholen, Fettalkohol-EO-Addukten oder Alkylphenol-EO-Addukten,
(F) eine Alkan- oder Alken-Sulfonsäure auf einem Dialkylsulfimide,
(G) EO-Addukte an Alkylphenole, Alkanole oder Alkylamine,
(H) Polypropylenglykol oder PO / EO-Blockcopolymere auf Alkandiolen oder Alkan-Polyolen
oder in Gegenwart von Mischungen dieser Verbindungen (A) - (H) ausgefällt und isoliert wird.

DE-A-3020073 lehrt eine in Wasser dispergierbare Pastenzusammensetzung von Metallpulvern, gekennzeichnet durch
(A) Metallpulver, und
(B) 0,1 bis 20 Gew.-% (bezogen auf das Gewicht der Metallpulver) mindestens eines organischen Phosphorsäureesters der nachstehenden allgemeinen Formel (III) 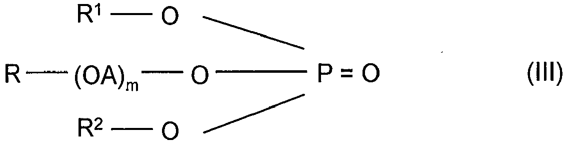 worin
   - R: einen C₆₋₂₄-Alkylrest, einen C₆₋₂₄-Alkenylrest oder einen Arylrest bedeutet, der mindestens einen C₆₋₂₄-Alkylsubstituenten oder mindestens einen C₆₋₂₄-Alkenylsubstituenten trägt,
   - A: einen C₂₋₄-Alkylenrest bedeutet,
   - m: eine ganze Zahl von 0 bis 20 bedeutet und
   - R¹ und R²: unabhängig voneinander ein Wasserstoffatom, einen C₁₋₂₄-Alkylrest, einen C₁₋₂₄-Alkenylrest, einen C₆₋₂₄-Arylrest oder einen R-(OA)ₘ-Rest bedeuten, worin R, A und m die gleiche Bedeutung wie oben haben.

Um die Kompatibilität der wässrigen Pigmentpräparationen für eine möglichst große Anzahl von Lacken und Farben zu ermöglichen, soll ferner auf die Verwendung von Bindemitteln bei der Herstellung der erfindingsgemäßen Pigmentpräparationen verzichtet werden.
Eine weitere Aufgabe der Erfindung war es, wässrige Pigmentpräparationen mit geringem humantoxikologischen Potenzial und geringer Umweltgefährdung bereit zu stellen. Leicht flüchtige organische Verbindungen mit einem Siedepunkt von < 250 °C (VOC Gehalte) sollen den wässrigen Pigmentpräparationen nicht explizit zugesetzt werden und nur in geringen Mengen in Form von nicht umgesetzten Syntheserohstoffe oder als Nebenreaktionsprodukten enthalten sein.

Überraschenderweise wurde gefunden, dass Pigmentpräparationen, die Phosphorsäureester der Formel (IV) in Kombination mit nichtionischen Tensiden enthalten, diese Aufgabe erfüllen.

Gegenstand der Erfindung sind daher wässrige, bindemittelfreie Pigmentpräparationen, enthaltend
(A) 1,0 bis 75,0 Gew.-% mindestens eines organischen oder anorganischen Weiß- oder Buntpigmentes oder eine Mischung verschiedener organischer und anorganischer Weiß- oder Buntpigmente,
(B) 0,01 bis 8,0 Gew.-% mindestens eines Phosphorsäureesters der Formel (IV), 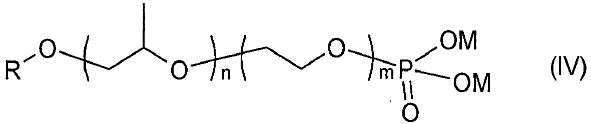 worin
   - R: ein linearer oder verzweigter, gesättigter oder ungesättigter C₈ bis C₁₈-aliphatischer Kohlenwasserstoffrest,
   - M: ein Wasserstoffatom oder ein Natrium-, Kalium- oder Ammoniumion,
   - n: eine ganze Zahl von 0 bis 20 und
   - m: eine ganze Zahl von 0 bis 20 darstellen,
(C) 0,01 bis 12,0 Gew.-% eines ethoxylierten Fettsäurealkanolamidethoxylats der Formel (V) 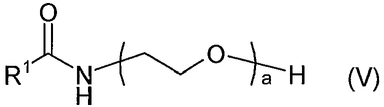 worin
   - a: für eine ganze Zahl von 3 bis 50, und
   - R¹: für C₇- bis C₂₁-Alkyl oder Alkenyl stehen, und
(G) Wasser.

Die erfindungsgemäße Pigmentpräparation kann darüber hinaus gegebenenfalls einen oder mehrere folgender Bestandteile umfassen:
(D) 0, vorzugsweise 0,01 bis 8,0 Gew.-% Tonmineralverdicker ausgewählt aus natürlichen oder alkalisch aktivierten Montmorrilonit-Schichtsilikatmineralien,
(E) 0, vorzugsweise 0,01 bis 20,0 Gew.-% anorganische Füllstoffe, und/oder
(F) 0, vorzugsweise 0,01 bis 30 Gew.-% weitere, für die Herstellung von wässrigen Pigmentpräparationen übliche Hilfsmittel wie zusätzliche Netzmittel, Feuchthaltemittel, Lösemittel, Entschäumer, Rheologieadditive, Konservierungsmittel, Puffersubstanzen und pH-Regulatoren

Die erfindungsgemäßen Pigmentpräparationen sind scherbeständig, eintrockenbeständig, lagerbeständig, schäumen bei der Applikation nicht oder nur wenig und verfügen über eine hervorragende Rheologie.

Die erfindungsgemäßen Pigmentpräparationen sind Bindemittelfrei. Bindemittel im Sinne dieser Erfindung sind Polymere oder Harze, die in einem geeigneten Lösemitteln gelöst sind und physikalisch, chemisch, thermisch, oxidativ oder strahlengehärtet trocknen. Während des Trocknungsvorgangs verfilmen die Polymere oder Harze und binden so die verwendeten Pigmente und Füllstoffe eines Beschichtungsstoffes. Da Bindemittel auch über dispergierende Eigenschaften verfügen, verwendet man sie gerne in Kombination mit niedermolekularen Netz- und Dispergiermitteln für die Herstellung von Pigmentpräparationen. Nachteil der Verwendung eines Bindemittels für die Herstellung von Pigmentpräparationen ist Einschränkung der Verwendbarkeit der Pigmentpräparation, die mit einer möglichst großen Anzahl verschiedener Lacke und Farbe und den darin enthaltenen Bindemitteln verträglich sein sollen.

Die Komponente (A) der erfindungsgemäßen Pigmentpräparationen ist vorzugsweise ein feinteiliges, organisches oder anorganisches Weiß- oder Buntpigment oder ein Gemisch verschiedener solcher Pigmente.

Als beispielhafte Auswahl besonders bevorzugter organischer Pigmente sind dabei Rußpigmente, wie z. B. Gas- oder Furnaceruße; Monoazo- und Disazopigmente, insbesondere die Color Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 254, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61 zu nennen.

Geeignete anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente. Insbesondere werden die Color Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet. Bevorzugt werden auch häufig Mischungen anorganischer Pigmente verwendet. Mischungen von organischen mit anorganischen Pigmenten werden ebenfalls häufig verwendet.

Die Komponente (B) der erfindungsgemäßen Pigmentpräparationen ist ein Phosphorsäureester von synthetischen und natürlichen Alkoholen und/oder deren Alkoxylaten, welcher daraus durch Umsetzen mit einem Phosphatierungsreagenz hergestellt werden kann.

Dafür geeignete Alkohole sind aliphatische lineare oder verzweigte, gesättigte oder ungesättigte C₈- bis C₁₈-Alkohole.

Geeignete Alkoholalkoxylate werden durch Alkoxylierung von linearen oder verzweigten, gesättigten oder ungesättigten C₈- bis C₁₈-Alkoholen mit bis zu 20 mol Ethylenoxid und/oder Propylenoxid hergestellt. Für die Alkoxylierung werden alkalische Katalysatoren wie Kaliumhydroxid, Natriumhydroxid oder Calciumhydroxid verwendet, welche nach der erfolgten Polyaddition der Alkoxylate mittels niedermolekularer organischer Säuren wie beispielsweise Essigsäure, Propionsäure, Milchsäure oder längerkettigen C₆ bis C₁₂-Carbonsäuren neutralisiert werden.

Gemischte Alkoxylate können sowohl statistisch als auch blockweise alkoxyliert sein, sofern im Folgenden nicht anders beschrieben.

In einer bevorzugten Ausführungsform wird ein C₈- bis C₁₈-Alkohol mit 1 bis 20 Mol Ethylenoxid und anschließend mit einem geeigneten Phosphatierungsreagenz umgesetzt.

In einer weiteren bevorzugten Ausführungsform wird der C₈- bis C₁₈-Alkohole blockweise zunächst mit 1 bis 20 Mol Propylenoxid und anschließend mit 1 bis 20 Mol Ethylenoxid umgesetzt und anschließend mit einem geeigneten Phosphatierungsreagenz umgesetzt.

Geeignete Syntheseverfahren für die Phosphatierungsreaktion der Alkohole und Alkoholalkoxylate verwenden Orthophoshorsäure, Polyphosphorsäure, Phosphorpentoxid oder Phosphorylchlorid als Phosphatierungsreagenz. Die Phosphorsäureester der Alkohole und Alkoholalkoxylate liegen als Gemische vor, wobei die Phosphorsäureester als Mono-, Di- und Triester neben nicht umgesetztem Alkohol bzw. Alkoholalkoxylat und Phosphatierungsreagenz vorliegen können. Je nach Phosphatierungsreagenz und dem eingesetzten molaren Verhältnis der Alkohole bzw. Alkoholalkoxylate zum Phosphatierungsreagenz entstehen Phosphorsäureester unterschiedlicher Zusammensetzung. Die Synthesebedingungen werden vorzugsweise so gewählt, dass ein möglichst großer Anteil an Monophosphorsäureester entsteht.

Die Komponente (C) der erfindungsgemäßen Pigmentpräparationen ist ein nichtionisches Tensid, ausgewählt aus der Gruppe der Fettsäurealkanolamidethoxylate der Formel (V)

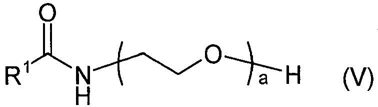

Ethoxylierte Fettsäureethanolamide werden vorzugsweise durch Umsetzen von Fettsäuren mit Ethanolamin zum Fettsäureethanolamid und anschließender Anlagerung von Ethylenoxid mittels alkalischer Katalysatoren wie Natrium- oder Kaliummethylat hergestellt. R¹ ist vorzugsweise eine Alkyl- oder Alkenylgruppe mit 11 bis 19 Kohlenstoffatomen, wobei auch mehr als eine Doppelbindung enthalten sein kann. a ist eine ganze Zahl von 1 bis 100 und vorzugsweise mindestens gleich 3, insbesondere mindestens gleich 4. Ausgehend vom Fettsäureethanolamid wird Ethylenoxid vorzugsweise an die endständige Hydroxylgruppe addiert. Die Addition von Ethylenoxid an den Stickstoff der Säureamidgruppe erfolgt untergeordnet in einer Nebenreaktion, so dass am Stickstoff untergeordnet auch 2 Polyethylenglykoletherreste gebunden sind. Geeignete Fettsäuren für die Herstellung der Fettsäureethanolamide sind Caprinsäure, Laurinsäure, Myristinsäure, Palmitinsäuren, Margarinsäure, Stearinsäure, Arachinsäure, Behensäure, Palimtoelinsäure, Ölsäure und natürlich vorkommende Mischungen wie Palmkernölfettsäure, Rapsölfettsäure, Sonnenblumenölfettsäure, Sojaölfettsäure oder Harzsäuren wie Tallölfettsäure. Die als Rohstoff verwendeten Fettsäuren können gesättigt und ungesättigt vorliegen.

Die Komponente (D) ist ein Tonmineralverdicker auf Basis von natürlichen oder alkalisch aktivierten Montmorrilonit-Schichtsilikatmineralien. Montmorrilonit ist der wesentliche Bestandteil von Bentonit und besitzt ein hohes Ionenaustauschvermögen. Bei Zugabe von Wasser dehnt sich das Mineral um ein vielfaches der Ursprungsgröße aus, wodurch die sich die Viskosität der wässrigen Dispersion erhöht. Montmorrilonit als Tonmineralverdicker kann der erfindungsgemäßen Pigmentpräparation zugesetzt werden, um das Absetzen von organischen und anorganischen Pigmenten und Füllstoffen und die Synerese, das heißt die Bildung einer zweiten Phase mit unterschiedlicher Zusammensetzung zu verlangsamen oder zu verhindern.

Die Komponente (E) ist ein anorganischer Füllstoff, der den erfindungsgemäßen Pigmentpräparationen zugesetzt werden kann, um deren Dichte zu erhöhen und das Fließverhalten zu verändern. Bei volumetrischer Dosierung und geringer Pigmentkonzentration oder leichten organischen Pigmenten kann es möglich sein, dass sich die Pigmentpräparation in den Dosiergeräten nur schlecht dosieren lässt, weil die Gravitationskraft nicht ausreicht, um die flüssige Pigmentpräparation in das Farbengebinde zu entleeren. In anderen Fällen ist die Viskosität der Pigmentpräparationen bei niedrigen Pigmentkonzentrationen zu niedrig, was zu einem Nachtropfen führt. In beiden Fällen können den erfindungsgemäßen Pigmentpräparationen farblose anorganische Füllstoffe zugesetzt werden, um die Dichte der Pigmentpräparation zu erhöhen und das Fließverhalten zu verbessern. Geeignete Füllstoffe sind Calciumcarbonate wie natürlich vorkommende Kreide und gefälltes Calciumcarbonat, Dolomit, natürliches Siliciumdioxid (Quarzmehl), pyrogene und gefällte Kieselsäuren, Kieselgur, Aluminiumoxide, Aluminiumhydroxide, Talkum, Kaolin, Glimmer (Kalium-Aluminium-Silikat-Hydrat), Bariumsulfate wie natürlich vorkommendes Schwerspate und gefälltes Blanc Fix.

Die Komponenten (F) sind weitere für die Herstellung von wässrigen Pigmentpräparationen übliche Hilfsmittel wie zusätzliche Netzmittel, Feuchthaltemittel, Lösemittel, Entschäumer, Rheologieadditive, Konservierungsmittel, Puffersubstanzen und pH-Regulatoren.

Zusätzliche Netzmittel können Netzmittel auf Basis von Polysiloxanethern sein, beispielsweise ein Methoxypolyethoxypropyltrisiloxan, Alkindiolethoxylate und Fluortenside.

Geeignete Feuchthaltemittel und Lösemittel sind vorzugsweise Glykolether, worunter hier Verbindungen mit Ethoxy- und/oder Propoxygruppen verstanden werden, welche mittlere Molmassen zwischen 200 und 20.000 g/mol aufweisen, insbesondere Polyethylenglykolether oder Polypropylenglykolether mit einer mittleren Molmasse zwischen 200 und 20.000 g/mol, Mono-, Di- oder Triethylenglykol, Mono-, Di- oder Tripropylenglykol, Methy-, Ethyl- Propyl-, Butyl- oder höherwertige Alkylpolyalkylenglykolether mit 1, 2, 3 oder mehreren Ethylenglykol- oder Propylenglykoleinheiten wie beispielsweise Methoxypropanol, Dipropylenglykolmonomethylether, Tripropylenglykolmonomethylether, Ethylenglykolmonobutylether, Diethylenglykolmonobutylether, Butylpolyethylenglykolether, Propylpolyethylenglykolether, Ethylpolyethylenglykolether, Methylpolyethylenglykolether, Dimethylpolyethylenglykolether, Dimethylpolypropylenglykolether, Glycerinethoxylate mit einem Molekulargewicht von 200 bis 20.000 g/mol, Pentaerythritolalkoxylate mit einem Molekulargewicht von 200 bis 20.000 g/mol, oder weitere Ethoxylierungs- und Alkoxylierungsprodukte und statistische oder Blockcopolymere die durch Addition von Ethylenoxid und/oder Propylenoxide an ein- und höherwertige Alkohole hergestellt wurden, mit einem Molekulargewicht von 200 bis 20.000 g/mol.

Angaben zu Molekulargewichten von Polymeren beziehen sich stets auf deren zahlenmittleres Molekulargewicht, sofern im Einzelfall nicht anders angegeben. Molekulargewichte sind per GPC gegen Polyethylenglykol als Standard zu bestimmen.

Weitere geeignete Hilfsstoffe der erfindungsgemäßen wässrigen Pigmentpräparationen sind vorzugsweise wasserlösliche organische oder hydrotrope Substanzen, die gegebenenfalls auch als Lösungsmittel dienen. Besonders geeignet sind beispielsweise Formamid, Harnstoff, Tetramethylharnstoff, ε-Caprolactam, Glycerin, Diglycerin, Polyglycerin, N-Methylpyrrolidon, 1,3-Diethyl-2-imidazolidinon, Thiodiglykol, Natrium-Benzolsulfonat, Natrium-Xylolsulfonat, Natrium-Toluolsulfonat, Natrium-Cumolsulfonat, Natrium-Dodecylsulfonat, Natrium-Benzoat, Natrium-Salicylat, Natrium-Butylmonoglykolsulfat.

Geeignete Entschäumer sind vorzugsweise Mineralölentschäumer und deren Emulsionen, Siliconölentschäumer und Siliconölemulsionen, Polyalkylenglykole, Polyalkylenglykolfettsäureester, Fettsäuren, höherwertige Alkohole, Phosphorsäureester, hydrophob modifizierte Silika, Aluminiumtristearat, Polyethylenwachse und Amidwachse.

Geeignete weitere Rheologieadditive als Mittel zur Regulierung der Viskosität sind z. B. Stärke- und Cellulosederivate und hydrophobmodifizierte ethoxylierte Urethane (HEUR)-Verdicker, alkaliquellbare Acrylatverdicker, hydrophob modifizierte Acrylatverdicker, Polymere der Acrylamidomethylpropansulfonsäure oder pyrogene Kieselsäure.

Topfkonservierer werden zur Stabilisierung der wässrigen Pigmentpräparationen und zur Verhinderung der unkontrollierten Vermehrung von Bakterien, Algen und Pilzen zugesetzt. Geeignete Biozide sind Formaldehyd, Formaldehyd abspaltende Verbindungen, Methylisothiazolinon, Chlormethylisothiazolinon, Benzisothiazolinon, Bronopol, Dibromodicyanonbutan und silberchloridbeschichtetes Titandioxid.

Als Puffersubstanzen und pH-Regulatoren kommen vorzugsweise organische oder anorganische Basen und Säuren zum Einsatz. Bevorzugte organische Basen sind Amine, wie z. B. Ethanolamin, Diethanolamin, Triethanolamin, N,N-Dimethylethanolamin, Diisopropylamin, 2-Amino-2-methyl-1-propanol oder Dimethylaminomethylpropanol. Bevorzugte anorganische Basen sind Natrium-, Kalium-, Lithiumhydroxid oder Ammoniak.

Zur Herstellung der erfindungsgemäßen, wässrigen Pigmentpräparationen benutztes Wasser, Komponente (G), wird vorzugsweise in Form von destilliertem oder entsalztem Wasser eingesetzt. Auch Trinkwasser (Leitungswasser) und/oder Wasser natürlichen Ursprungs kann eingesetzt werden. Wasser ist in der erfindungsgemäßen wässrigen Pigmentpräparation vorzugsweise zu 10 bis 75 Gew.-%, insbesondere ad 100 Gew.-% enthalten.

Die erfindungsgemäßen wässrigen Pigmentpräparationen weisen vorzugsweise eine Viskosität von 10 bis 10.000 mPas, bevorzugt 30 bis 5.000 mPas und besonders bevorzugt 50 bis 3.000 mPas auf, gemessen mit einem Kegel-Platte-Viskosimeter bei einer Scherrate von 1/60 sec⁻¹ z. B. einem Haake Viscometer 550 gemessen.

Die erfindungsgemäßen, wässrigen Pigmentpräparationen sind in jedem Verhältnis mit Wasser mischbar, wobei sich auch mehrere unterschiedliche Präparationen mit Wasser mischen lassen. Sie zeichnen sich gegenüber herkömmlichen Pigmentpräparationen durch eine hervorragende Lagerstabilität und gute rheologische Eigenschaften aus.

Gegenstand der vorliegenden Erfindung ist auch ein Verfahren zur Herstellung der erfindungsgemäßen Pigmentpräparationen, indem man die Komponente (A) in Form von Pulver oder Granulat in Gegenwart von Wasser (G) sowie der Komponenten (B), (C) und gegebenenfalls (D), (E) und (F) in an sich üblicher Weise dispergiert, anschließend gegebenenfalls weiteres Wasser (G) zumischt und die erhaltende wässrige Pigmentdispersion mit Wasser auf die gewünschte Konzentration einstellt. Vorzugsweise werden die flüssigen Komponenten (B), (C), (G) und gegebenenfalls (F) vermischt und homogenisiert, dann die festen, pulverförmigen, granulierten oder schuppenförmigen Komponente (A), (D) und (E) und in die vorgelegte Mischung eingerührt, wobei das Pigment und gegebenenfalls die Füllstoffe angeteigt und vordispergiert werden. Je nach Kornhärte der eingesetzten Pigmente wird anschließend gegebenenfalls unter Kühlung mit Hilfe eines Mahl- oder Dispergieraggregats feindispergiert oder feinverteilt. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperlmühlen verwendet werden. Die Feindispergierung bzw. Mahlung der Pigmente erfolgt bis zur gewünschten Teilchengrößenverteilung und kann bei Temperaturen im Bereich von 0 bis 100 °C erfolgen, zweckmäßig bei einer Temperatur zwischen 10 und 70 °C, vorzugsweise bei 20 bis 60 °C. Im Anschluss an die Feindispergierung kann die Pigmentpräparation mit Wasser, vorzugsweise entionisiertem oder destilliertem Wasser, weiter verdünnt werden.

Die erfindungsgemäßen Pigmentpräparationen eignen sich zum Pigmentieren und Färben von makromolekularen Materialien aller Art. Besonders eignen sich die erfindungsgemäßen Pigmentpräparation zur Pigmentierung bzw. Herstellung von Anstrich- und Dispersionsfarben, Dispersionslacken, Druckfarben, hierbei beispielsweise Textildruck-, Flexodruck-, Dekordruck- oder Tiefdruckfarben, Tapetenfarben, wasserverdünnbaren Lacken, Holzbeizen, Holzschutzsystemen und Lacken zur Oberflächenbeschichtung von Gegenständen aus beispielsweise Metall, Holz, Kunststoff, Glas, Keramik, Beton, Textilmaterial, Papier oder Kautschuk zur Anwendung kommen.

Eine besondere Eigenschaft der erfindungsgemäßen Pigmentpräparationen ist ihre Verwendung als universale Abtönpasten. Universale Abtönpasten eignen sich sowohl zum Einfärben von wässrigen Farben als auch zum Abtönen von lösemittelhaltigen Lacken. Übliche Dispergiermittel für wässrige Pigmentpräparationen stabilisieren die Pigmente nur in wässrigen, nicht aber in lösemittelhaltigen Systemen. Werden wässrige Pigmentpräparationen zum Einfärben von lösemittelhaltigen Lacken verwendet, kann es zur Agglomeration der Pigmente kommen und zum Aufschwimmen der agglomerierten Pigmente im Lack kommen. Beim Auftragen der Lacke mit Pinsel, Rollen oder durch Sprühapplikation kann es zu Streifigkeit und zu einem unruhigen Farbbild aufgrund von Farbtonunterschieden kommen, weil die Pigmente in der Farbe und während des Trocknungsprozesses flokkulieren, so dass die Farbstärke reduziert wird. Beim Auftrag der eingefärbten Lacke werden die Pigmentagglomerate wieder aufgetrennt, aber unterschiedlich stark, so dass es zu den beobachteten Farbtonunterschieden kommt. Im Labor wird dieses Phänomen im Rubout-Test simuliert, welcher in US-3840383 beschrieben wird.

### Beispiele

### Herstellung einer Pigmentpräparation

Das Pigment wird, entweder als Pulver, Granulat oder als Presskuchen, zusammen mit den Dispergiermitteln und den anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert.
Zur Dispergierung werden die flüssigen Komponenten (B), (C) und (F) in einem Mahlbehälter vorgelegt und vermischt. Anschließend werden die pulverförmigen Komponenten (A) und gegebenenfalls (D) und (E) zugegeben und mit dem Dissolver vordispergiert.

Die anschließende Feindispergierung erfolgt mit Hilfe einer Perlmühle (z. B. mit AE3-M1 von VMA-Getzmann) oder aber einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgt. Anschließend wird die gewünschte Pigmentendkonzentration mit entionisiertem Wasser eingestellt, die Mahlkörper abgetrennt und die Pigmentpräparation isoliert.

### Prüfung der Lackkompatibilität und der Farbstärke

Die Pigmentpräparation wird eine Woche bei 60 °C gelagert und visuell beurteilt. Die Viskosität der Pigmentpräparation wird bei 25°C mit einem Haake Viscometer 550 bei einer Scherrate von 1/60 sec⁻¹ oder bei gut fließfähigen Pigmentpräparationen mit einem Brookfield-Viscometer, Model DV-II mit der Spindel 3 bei 100 UpM gemessen. Zur Bestimmung der Farbstärke und der Kompatibilität werden die Pigmentpräparationen jeweils einer wässrigen Dispersionsweißfarbe und einem mineralölhaltigen Langöl-Alkydlack zugesetzt. Für das Ausprüfen der Farbstärke und Kompatibilität werden je 200 g der abgetönten Farben bestehend aus 92 Gew.-% Grundlack und 8 Gew.-% der Pigmentpräparation in eine Blechdose geben und 60 Sekunden in einem Inkshaker 500 der Fa. Olbrich Know-how, Hemer homogenisiert. Die abgetönten Farben werden nach einem Tag auf einem Prüfkarton mit einer 120 µm Rakel auf einem Filmziehgerät, Modell 509 MC der Fa. Erichsen GmbH, Hemer ausgestrichen. An den trocknenden Farbfilmen wird der Rubout-Test wie in der Schrift US-3840383 beschriebenen Weise durchgeführt.

Die in den folgenden Beispielen beschriebenen Pigmentpräparationen wurden nach dem zuvor beschriebenen Verfahren hergestellt, wobei die folgenden Bestandteile in den angegebenen Mengen so verwendet wurden, dass 100 Teile der jeweiligen Pigmentpräparation entstehen. In vorliegender Anmeldung bedeuten "Teile" Gewichtsteile und Prozentangaben Gewichtsprozente, soweit im Einzelfall nichts anders angegeben ist.

### Beispiele für Pigmentpräparationen mit anorganischen Pigmenten

### Beispiel 1

| | | |
|---|---|---|
| 60,0 | Teile | C.I. Pigment Red 101 (Bayferrox Red 130, Fa. Lanxess, Komponente (A)), |
| 2,5 | Teile | eines Phosphorsäureesters eines C₁₆/C₁₈-Alkoholpolyalkylenglykolethers mit 5 Propylenglykoleinheiten und 6 Ethylenglykoleinheiten (Komponente (B)), |
| 8,0 | Teile | Talölfettsäureethanolamid umgesetzt mit 15 Mol Ethylenoxid (Dispersogen^{®} MT 150, Fa. Clariant, Komponente (C)), |
| 10,0 | Teile | Glycerinethoxylat mit einem Molekulargewicht von 300 g/mol (Polyglykol G 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 19,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 979 mPa·s, gemessen mit einem Haake Kegel-Platte-Viskosimeter. Nach weiterer Lagerung über 4 Wochen bei 25 °C bleibt die Pigmentpräparation homogen und für die Verwendung als Abtönpaste geeignet.

### Beispiel 2 (Vergleichsbeispiel)

| | | |
|---|---|---|
| 60,0 | Teile | C.I. Pigment Red 101 (Bayferrox Red 130, Fa. Lanxess, Komponente (A)), |
| 8,3 | Teile | 30 %ige wässrige Lösung eines Natriumcocoylglycinates (Hostapon^{®} SG, Fa. Clariant, Anionisches Dispergiermittel gemäß Stand der Technik), |
| 8,0 | Teile | Talölfettsäureethanolamid umgesetzt mit 15 Mol Ethylenoxid (Dispersogen^{®} MT 150, Fa. Clariant, Komponente (C)), |
| 10,0 | Teile | Glycerinethoxylat mit einem Molekulargewicht von 300 g/mol (Polyglykol G 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 13,2 | Teile | Wasser (Komponente (G)) |

Die Pigmentpräparation lässt sich anteigen und verflüssigen. Nach der Mahlung wird die Pigmentpräparation zu einem festen Kuchen.

### Beispiel 3 (Vergleichsbeispiel)

| | | |
|---|---|---|
| 60,0 | Teile | C.I. Pigment Red 101 (Bayferrox Red 130, Fa. Lanxess, Komponente (A)), |
| 8,3 | Teile | 30 %ige wässrige Lösung einer Alkylpolyethylenglykolethercarbonsäure, Natriumsalz (Dispersogen^{®} ECS, Fa. Clariant, Anionisches Dispergiermittel gemäß Stand der Technik), |
| 8,0 | Teile | Talölfettsäureethanolamid umgesetzt mit 15 Mol Ethylenoxid (Dispersogen^{®} MT 150, Fa. Clariant, Komponente (C)), |
| 10,0 | Teile | Glycerinethoxylat mit einem Molekulargewicht von 300 g/mol (Polyglykol G 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, |
| | | Komponente (F)), |
| 13,2 | Teile | Wasser (Komponente (G)) |

Die Pigmentpräparation lässt sich anteigen und verflüssigen. Nach der Mahlung wird die Pigmentpräparation zu einem festen Kuchen.

### Beispiel 4 (Vergleichsbeispiel)

| | | |
|---|---|---|
| 60,0 | Teile | C.I. Pigment Red 101 (Bayferrox Red 130, Fa. Lanxess, Komponente (A)), |
| 0,9 | Teile | Cocosalkylamin (Genamin^{®} CC 100, Fa. Clariant, Anionisches Dispergiermittel gemäß Stand der Technik), |
| 8,0 | Teile | Talölfettsäureethanolamid umgesetzt mit 15 Mol Ethylenoxid (Dispersogen^{®} MT 150, Fa. Clariant, Komponente (C)), |
| 10,0 | Teile | Glycerinethoxylat mit einem Molekulargewicht von 300 g/mol (Polyglykol G 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 28,6 | Teile | Wasser (Komponente (G)) |

Die Pigmentpräparation ist nach der Mahlung eine flüssige Dispersion. Die Pigmentpräparation hat nach einwöchiger Lagerung bei 60 °C einen festen, klebrigen Bodensatz gebildet. Nach dem Aufrühren des Bodensatzes beträgt die Viskosität 363 mPa·s gemessen mit einem Haake Kegel-Platte Viscometer bei einer Scherrate von 1/60 sec⁻¹. Nach erneuter Lagerung bildet sich wieder ein klebriger Bodensatz.

### Beispiel 5

| | | |
|---|---|---|
| 60,0 | Teile | C.I. Pigment Black 11 (Bayferrox Black 316, Fa. Lanxess, Komponente (A)), |
| 2,5 | Teile | eines Phosphorsäureesters eines C₁₆/C₁₈-Alkoholpolyalkylenglykolethers mit 5 Propylenglykoleinheiten und 6 Ethylenglykoleinheiten |
| 8,0 | Teile | (Komponente (B)), Talölfettsäureethanolamid umgesetzt mit 15 Mol Ethylenoxid (Dispersogen^{®} MT 150, Fa. Clariant, Komponente (C)), |
| 10,0 | Teile | Glycerinethoxylat mit einem Molekulargewicht von 300 g/mol (Polyglykol G 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 19,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 1040 Pa·s, gemessen mit einem Haake Kegel-Platte-Viskosimeter.

### Beispiel 6

| | | |
|---|---|---|
| 60,0 | Teile | C.I. Pigment Green 17 (Chrome Oxide Green GN, Fa. Lanxess, Komponente (A)), |
| 2,5 | Teile | eines Phosphorsäureesters eines C₁₆/C₁₈-Alkoholpolyalkylenglykolethers mit 5 Propylenglykoleinheiten und 6 Ethylenglykoleinheiten (Komponente (B)), |
| 8,0 | Teile | Talölfettsäureethanolamid umgesetzt mit 15 Mol Ethylenoxid (Dispersogen^{®} MT 150, Fa. Clariant, Komponente (C)), |
| 10,0 | Teile | Glycerinethoxylat mit einem Molekulargewicht von 300 g/mol (Polyglykol G 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 19,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 620 Pa·s, gemessen mit einem Haake Kegel-Platte-Viskosimeter.

### Beispiel 7

| | | |
|---|---|---|
| 60,0 | Teile | C.I. Pigment Red 101 (Bayferrox Red 130, Fa. Lanxess, Komponente (A)), |
| 2,5 | Teile | eines Phosphorsäureesters eines C₁₃-Alkoholpolyalkylenglykolethers mit 6 Ethylenglykoleinheiten (Hostaphat^{®} 1306, Fa. Clariant, Komponente (B)), |
| 8,0 | Teile | Talölfettsäureethanolamid umgesetzt mit 15 Mol Ethylenoxid (Dispersogen^{®} MT 150, Fa. Clariant, Komponente (C)), |
| 10,0 | Teile | Glycerinethoxylat mit einem Molekulargewicht von 300 g/mol (Polyglykol G 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 19,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 460 mPa·s, gemessen mit einem Haake Kegel-Platte-Viskosimeter. Nach weiterer Lagerung über 4 Wochen bei 25 °C bleibt die Pigmentpräparation homogen und für die Verwendung als Abtönpaste geeignet.

### Beispiel 8

| | | |
|---|---|---|
| 60,0 | Teile | C.I. Pigment Black 11 (Bayferrox Black 316, Fa. Lanxess, Komponente (A)), |
| 2,5 | Teile | eines Phosphorsäureesters eines C₁₃-Alkoholpolyalkylenglykolethers mit 6 Ethylenglykoleinheiten (Hostaphat^{®} 1306, Fa. Clariant, Komponente (B)), |
| 8,0 | Teile | Talölfettsäureethanolamid umgesetzt mit 15 Mol Ethylenoxid (Dispersogen^{®} MT 150, Fa. Clariant, Komponente (C)), |
| 10,0 | Teile | Glycerinethoxylat mit einem Molekulargewicht von 300 g/mol (Polyglykol G 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 19,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 1160 mPa·s, gemessen mit einem Haake Kegel-Platte-Viskosimeter. Nach weiterer Lagerung über 4 Wochen bei 25 °C bleibt die Pigmentpräparation homogen und für die Verwendung als Abtönpaste geeignet.

### Beispiel 9

| | | |
|---|---|---|
| 60,0 | Teile | C.I. Pigment Blue 28 (Heucodur Blau 551, Fa. Heubach, Komponente (A)), |
| 2,5 | Teile | eines Phosphorsäureesters eines C₁₆/C₁₈-Fettalkohols (Hostaphat^{®} CS 120, Fa. Clariant, Komponente (B)), |
| 8,0 | Teile | Talölfettsäureethanolamid umgesetzt mit 15 Mol Ethylenoxid (Dispersogen^{®} MT 150, Fa. Clariant, Komponente (C)), |
| 10,0 | Teile | Glycerinethoxylat mit einem Molekulargewicht von 300 g/mol (Polyglykol G 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 19,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 850 mPa·s, gemessen mit einem Haake Kegel-Platte-Viskosimeter. Nach weiterer Lagerung über 4 Wochen bei 25 °C bleibt die Pigmentpräparation homogen und für die Verwendung als Abtönpaste geeignet.

### Beispiel 10

| | | |
|---|---|---|
| 60,0 | Teile | C.I. Pigment Black 11 (Bayferrox Black 316, Fa. Lanxess, Komponente (A)), |
| 2,5 | Teile | eines Phosphorsäureesters eines C₁₆/C₁₈-Fettalkohols (Hostaphat^{®} CS 120, Fa. Clariant, Komponente (B)), |
| 8,0 | Teile | Talölfettsäureethanolamid umgesetzt mit 15 Mol Ethylenoxid (Dispersogen^{®} MT 150, Fa. Clariant, Komponente (C)), |
| 10,0 | Teile | Glycerinethoxylat mit einem Molekulargewicht von 300 g/mol (Polyglykol G 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 19,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 970 Pa·s, gemessen mit einem Haake Kegel-Platte-Viskosimeter. Nach weiterer Lagerung über 4 Wochen bei 25 °C bleibt die Pigmentpräparation homogen und für die Verwendung als Abtönpaste geeignet.

### Beispiel 11

| | | |
|---|---|---|
| 50,0 | Teile | C.I. Pigment Black 11 (Bayferrox Black 316, Fa. Lanxess, Komponente (A)), |
| 2,5 | Teile | eines Phosphorsäureesters eines C₁₂/C₁₄-Fettalkoholethoxylates mit 3 Ethylenglykoleinheiten (Hostaphat^{®} KL 340, Fa. Clariant, Komponente (B)), |
| 8,0 | Teile | Talölfettsäureethanolamid umgesetzt mit 5 Mol Ethylenoxid (Emulsogen^{®} MT 050, Fa. Clariant, Komponente (C)), |
| 10,0 | Teile | Glycerinethoxylat mit einem Molekulargewicht von 300 g/mol (Polyglykol G 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 29,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 1130 Pa·s, gemessen mit einem Haake Kegel-Platte-Viskosimeter. Nach weiterer Lagerung über 4 Wochen bei 25 °C bleibt die Pigmentpräparation homogen und für die Verwendung als Abtönpaste geeignet.

### Beispiel 12

| | | |
|---|---|---|
| 50,0 | Teile | C.I. Pigment Black 11 (Bayferrox Black 316, Fa. Lanxess, Komponente (A)), |
| 2,5 | Teile | eines Phosphorsäureesters eines C₁₂/C₁₄-Fettalkoholethoxylates mit 3 Ethylenglykoleinheiten (Hostaphat^{®} KL 340, Fa. Clariant, Komponente (B)), |
| 8,0 | Teile | Talölfettsäureethanolamid umgesetzt mit 15 Mol Ethylenoxid (Dispersogen^{®} MT 150, Fa. Clariant, Komponente (C)), |
| 10,0 | Teile | Glycerinethoxylat mit einem Molekulargewicht von 300 g/mol (Polyglykol G 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 29,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 700 Pa·s, gemessen mit einem Haake Kegel-Platte-Viskosimeter. Nach weiterer Lagerung über 4 Wochen bei 25 °C bleibt die Pigmentpräparation homogen und für die Verwendung als Abtönpaste geeignet.

### Beispiel 13

| | | |
|---|---|---|
| 50,0 | Teile | C.I. Pigment Black 11 (Bayferrox Black 316, Fa. Lanxess, Komponente (A)), |
| 2,5 | Teile | eines Phosphorsäureesters eines C₁₂/C₁₄-Fettalkoholethoxylates mit 3 Ethylenglykoleinheiten (Hostaphat^{®} KL 340, Fa. Clariant, Komponente (B)), |
| 8,0 | Teile | Talölfettsäureethanolamid umgesetzt mit 30 Mol Ethylenoxid (Komponente (C)), |
| 10,0 | Teile | Glycerinethoxylat mit einem Molekulargewicht von 300 g/mol (Polyglykol G 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 29,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 230 Pa·s, gemessen mit einem Haake Kegel-Platte-Viskosimeter. Nach weiterer Lagerung über 4 Wochen bei 25 °C bleibt die Pigmentpräparation homogen und für die Verwendung als Abtönpaste geeignet.

### Beispiele für Pigmentpräparationen mit organischen Pigmenten

### Beispiel 14

| | | |
|---|---|---|
| 21,0 | Teile | C.I. Pigment Blue 15:3 (Hostaperm^{®} Blue B2G, Fa. Clariant, Komponente (A)), |
| 2,5 | Teile | eines Phosphorsäureesters eines C₁₆/C₁₈-Alkoholpolyalkylenglykolethers mit 5 Propylenglykoleinheiten und 6 Ethylenglykoleinheiten (Komponente (B)), |
| 6,0 | Teile | Talölfettsäureethanolamid umgesetzt mit 15 Mol Ethylenoxid (Dispersogen^{®} MT 150, Fa. Clariant, Komponente (C)), |
| 2,0 | Teile | Montmorrillonit-Tonmineralverdicker und Antiabsetzmittel (Ceratofix^{®} VP, Fa. Clariant, Komponente (D)), |
| 18,0 | Teile | Bariumsulfat (Blanc Fix micro, Fa. Sachtleben, Komponente (E)), |
| 10,0 | Teile | Glycerinethoxylat mit einem Molekulargewicht von 300 g/mol (Polyglykol 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 40,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 1230 mPa·s, gemessen mit einem Brookfield-Viskosimeter mittels Spindel 3 bei 100 UpM. Die mit der Pigmentpaste abgetönte Dispersionsweißfarbe und der Langöl-Alkydlack zeigen keinen Rubout. Nach weiterer Lagerung über 4 Wochen bei 25 °C bleibt die Pigmentpräparation homogen und für die Verwendung als Abtönpaste geeignet.

### Beispiel 15

| | | |
|---|---|---|
| 6,0 | Teile | C.I. Pigment Black 7 (Special Black 4, Fa. Evonik, Komponente (A)), |
| 2,5 | Teile | eines Phosphorsäureesters eines C₁₆/C₁₈-Alkoholpolyalkylenglykolethers mit 5 Propylenglykoleinheiten und 6 Ethylenglykoleinheiten (Komponente (B)), |
| 6,0 | Teile | Talölfettsäureethanolamid umgesetzt mit 15 Mol Ethylenoxid (Dispersogen^{®} MT 150, Fa. Clariant, Komponente (C)), |
| 1,0 | Teile | Montmorrillonit-Tonmineralverdicker und Antiabsetzmittel (Ceratofix^{®} VP, Fa. Clariant, Komponente (D)), |
| 26,0 | Teile | Bariumsulfat (Blanc Fix micro, Fa. Sachtleben, Komponente (E)), |
| 10,0 | Teile | Glycerinethoxylat mit einem Molekulargewicht von 300 g/mol (Polyglykol 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 48,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 32 mPa·s, gemessen mit einem Brookfield-Viskosimeter mittels Spindel 3 bei 100 UpM. Die mit der Pigmentpaste abgetönte Dispersionsweißfarbe und der Langöl-Alkydlack zeigen keinen Rubout. Nach weiterer Lagerung über 4 Wochen bei 25 °C bleibt die Pigmentpräparation homogen und für die Verwendung als Abtönpaste geeignet.

### Beispiel 16

| | | |
|---|---|---|
| 2,0 | Teile | C.I. Pigment Violet 23 (Hostaperm^{®} Violet RL 02, Fa. Clariant, Komponente (A)), |
| 2,5 | Teile | eines Phosphorsäureesters eines C₁₆/C₁₈-Alkoholpolyalkylenglykolethers mit 5 Propylenglykoleinheiten und 6 Ethylenglykoleinheiten (Komponente (B)), |
| 6,0 | Teile | Talölfettsäureethanolamid umgesetzt mit 15 Mol Ethylenoxid (Dispersogen^{®} MT 150, Fa. Clariant, Komponente (C)), |
| 2,0 | Teile | Montmorrillonit-Tonmineralverdicker und Antiabsetzmittel (Ceratofix^{®} VP, Fa. Clariant, Komponente (D)), |
| 29,0 | Teile | Bariumsulfat (Blanc Fix micro, Fa. Sachtleben, Komponente (E)), |
| 10,0 | Teile | Glycerinethoxylat mit einem Molekulargewicht von 300 g/mol (Polyglykol 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 48,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 90 mPa·s, gemessen mit einem Brookfield-Viskosimeter mittels Spindel 3 bei 100 UpM. Die mit der Pigmentpaste abgetönte Dispersionsweißfarbe und der Langöl-Alkydlack zeigen keinen Rubout. Nach weiterer Lagerung über 4 Wochen bei 25 °C bleibt die Pigmentpräparation homogen und für die Verwendung als Abtönpaste geeignet.

### Beispiel 17

| | | |
|---|---|---|
| 13,0 | Teile | C.I. Pigment Red 112 (Permanent^{®} Red FGR, Fa. Clariant, Komponente (A)), |
| 2,5 | Teile | eines Phosphorsäureesters eines C₁₆/C₁₈-Alkoholpolyalkylenglykolethers mit 5 Propylenglykoleinheiten und 6 Ethylenglykoleinheiten (Komponente (B)), |
| 6,0 | Teile | Talölfettsäureethanolamid umgesetzt mit 15 Mol Ethylenoxid (Dispersogen^{®} MT 150, Fa. Clariant, Komponente (C)), |
| 2,0 | Teile | Montmorrillonit-Tonmineralverdicker und Antiabsetzmittel (Ceratofix^{®} VP, Fa. Clariant, Komponente (D)), |
| 25,0 | Teile | Bariumsulfat (Blanc Fix micro, Fa. Sachtleben, Komponente (E)), |
| 10,0 | Teile | Glycerinethoxylat mit einem Molekulargewicht von 300 g/mol (Polyglykol 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 41,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 200 mPa·s, gemessen mit einem Brookfield-Viskosimeter mittels Spindel 3 bei 100 UpM. Die mit der Pigmentpaste abgetönte Dispersionsweißfarbe und der Langöl-Alkydlack zeigen keinen Rubout. Nach weiterer Lagerung über 4 Wochen bei 25 °C bleibt die Pigmentpräparation homogen und für die Verwendung als Abtönpaste geeignet.

### Beispiel 18

| | | |
|---|---|---|
| 21,0 | Teile | C.I. Pigment Blue 15:3 (Hostaperm^{®} Blue B2G, Fa. Clariant, Komponente (A)), |
| 2,5 | Teile | eines Phosphorsäureesters eines C₁₃-Alkoholpolyalkylenglykolethers mit 6 Ethylenglykoleinheiten (Hostaphat^{®} 1306, Fa. Clariant, Komponente (B)), |
| 6,0 | Teile | Talölfettsäureethanolamid umgesetzt mit 15 Mol Ethylenoxid (Dispersogen^{®} MT 150, Fa. Clariant, Komponente (C)), |
| 2,0 | Teile | Montmorrillonit-Tonmineralverdicker und Antiabsetzmittel (Ceratofix^{®} VP, Fa. Clariant, Komponente (D)), |
| 18,0 | Teile | Bariumsulfat (Blanc Fix micro, Fa. Sachtleben, Komponente (E)), |
| 10,0 | Teile | Glycerinethoxylat mit einem Molekulargewicht von 300 g/mol (Polyglykol 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 40,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 520 mPa·s, gemessen mit einem Brookfield-Viskosimeter mittels Spindel 3 bei 100 UpM. Die mit der Pigmentpaste abgetönte Dispersionsweißfarbe und der Langöl-Alkydlack zeigen keinen Rubout. Nach weiterer Lagerung über 4 Wochen bei 25 °C bleibt die Pigmentpräparation homogen und für die Verwendung als Abtönpaste geeignet.

### Beispiel 19

| | | |
|---|---|---|
| 6,0 | Teile | C.I. Pigment Black 7 (Special Black 4, Fa. Evonik, Komponente (A)), |
| 2,5 | Teile | eines Phosphorsäureesters eines C₁₃-Alkoholpolyalkylenglykolethers mit 6 Ethylenglykoleinheiten (Hostaphat^{®} 1306, Fa. Clariant, Komponente (B)), |
| 6,0 | Teile | Talölfettsäureethanolamid umgesetzt mit 15 Mol Ethylenoxid (Dispersogen^{®} MT 150, Fa. Clariant, Komponente (C)), |
| 1,0 | Teile | Montmorrillonit-Tonmineralverdicker und Antiabsetzmittel (Ceratofix^{®} VP, Fa. Clariant, Komponente (D)), |
| 26,0 | Teile | Bariumsulfat (Blanc Fix micro, Fa. Sachtleben, Komponente (E)), |
| 10,0 | Teile | Glycerinethoxylat mit einem Molekulargewicht von 300 g/mol (Polyglykol 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 48,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 46 mPa·s, gemessen mit einem Brookfield-Viskosimeter mittels Spindel 3 bei 100 UpM. Die mit der Pigmentpaste abgetönte Dispersionsweißfarbe und der Langöl-Alkydlack zeigen keinen Rubout. Nach weiterer Lagerung über 4 Wochen bei 25 °C bleibt die Pigmentpräparation homogen und für die Verwendung als Abtönpaste geeignet.

### Beispiel 20

| | | |
|---|---|---|
| 2,0 | Teile | C.I. Pigment Violet 23 (Hostaperm^{®} Violet RL 02, Fa. Clariant, Komponente (A)), |
| 2,5 | Teile | eines Phosphorsäureesters eines C₁₃-Alkoholpolyalkylenglykolethers mit 6 Ethylenglykoleinheiten (Hostaphat^{®} 1306, Fa. Clariant, Komponente (B)), |
| 6,0 | Teile | Talölfettsäureethanolamid umgesetzt mit 15 Mol Ethylenoxid (Dispersogen^{®} MT 150, Fa. Clariant, Komponente (C)), |
| 3,0 | Teile | Montmorrillonit-Tonmineralverdicker und Antiabsetzmittel (Ceratofix^{®} VP, Fa. Clariant, Komponente (D)), |
| 29,0 | Teile | Bariumsulfat (Blanc Fix micro, Fa. Sachtleben, Komponente (E)), |
| 10,0 | Teile | Glycerinethoxylat mit einem Molekulargewicht von 300 g/mol (Polyglykol 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 47,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 58 mPas, gemessen mit einem Brookfield-Viskosimeter mittels Spindel 3 bei 100 UpM. Die mit der Pigmentpaste abgetönte Dispersionsweißfarbe und der Langöl-Alkydlack zeigen keinen Rubout. Nach weiterer Lagerung über 4 Wochen bei 25 °C bleibt die Pigmentpräparation homogen und für die Verwendung als Abtönpaste geeignet.

### Beispiel 21

| | | |
|---|---|---|
| 13,0 | Teile | C.I. Pigment Red 112 (Permanent^{®} Red FGR, Fa. Clariant, Komponente (A)), |
| 2,5 | Teile | eines Phosphorsäureesters eines C₁₃-Alkoholpolyalkylenglykolethers mit 6 Ethylenglykoleinheiten (Hostaphat^{®} 1306, Fa. Clariant, Komponente (B)), |
| 6,0 | Teile | Talölfettsäureethanolamid umgesetzt mit 15 Mol Ethylenoxid (Dispersogen^{®} MT 150, Fa. Clariant, Komponente (C)), |
| 3,0 | Teile | Montmorrillonit-Tonmineralverdicker und Antiabsetzmittel (Ceratofix^{®}VP, Fa. Clariant, Komponente (D)), |
| 25,0 | Teile | Bariumsulfat (Blanc Fix micro, Fa. Sachtleben, Komponente (E)), |
| 10,0 | Teile | Glycerinethoxylat mit einem Molekulargewicht von 300 g/mol (Polyglykol 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 40,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 150 mPa·s, gemessen mit einem Brookfield-Viskosimeter mittels Spindel 3 bei 100 UpM. Die mit der Pigmentpaste abgetönte Dispersionsweißfarbe und der Langöl-Alkydlack zeigen keinen Rubout. Nach weiterer Lagerung über 4 Wochen bei 25 °C bleibt die Pigmentpräparation homogen und für die Verwendung als Abtönpaste geeignet.

### Beispiel 22

| | | |
|---|---|---|
| 13,0 | Teile | C.I. Pigment Red 112 (Permanent^{®} Red FGR, Fa. Clariant, Komponente (A)), |
| 2,5 | Teile | eines Phosphorsäureesters eines C₁₆/C₁₈-Fettalkohols (Hostaphat^{®} CS 120, Fa. Clariant, Komponente (B)), |
| 6,0 | Teile | Talölfettsäureethanolamid umgesetzt mit 15 Mol Ethylenoxid (Dispersogen^{®} MT 150, Fa. Clariant, Komponente (C)), |
| 3,0 | Teile | Montmorrillonit-Tonmineralverdicker und Antiabsetzmittel (Ceratofix^{®} VP, Fa. Clariant, Komponente (D)), |
| 25,0 | Teile | Bariumsulfat (Blanc Fix micro, Fa. Sachtleben, Komponente (E)), |
| 10,0 | Teile | Glycerinethoxylat mit einem Molekulargewicht von 300 g/mol (Polyglykol 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 40,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 980 mPa·s, gemessen mit einem Brookfield-Viskosimeter mittels Spindel 3 bei 100 UpM. Die mit der Pigmentpaste abgetönte Dispersionsweißfarbe und der Langöl-Alkydlack zeigen keinen Rubout. Nach weiterer Lagerung über 4 Wochen bei 25 °C bleibt die Pigmentpräparation homogen und für die Verwendung als Abtönpaste geeignet.

### Beispiel 23

| | | |
|---|---|---|
| 2,0 | Teile | C.I. Pigment Violet 23 (Hostaperm^{®} Violet RL 02, Fa. Clariant, Komponente (A)), |
| 2,5 | Teile | eines Phosphorsäureesters eines C₁₆/C₁₈-Fettalkohols (Hostaphat^{®} CS 120, Fa. Clariant, Komponente (B)), |
| 6,0 | Teile | Talölfettsäureethanolamid umgesetzt mit 15 Mol Ethylenoxid (Dispersogen^{®} MT 150, Fa. Clariant, Komponente (C)), |
| 3,0 | Teile | Montmorrillonit-Tonmineralverdicker und Antiabsetzmittel |
| | | (Ceratofix^{®} VP, Fa. Clariant, Komponente (D)), |
| 29,0 | Teile | Bariumsulfat (Blanc Fix micro, Fa. Sachtleben, Komponente (E)), |
| 10,0 | Teile | Glycerinethoxylat mit einem Molekulargewicht von 300 g/mol (Polyglykol 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 47,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 90 mPa·s, gemessen mit einem Brookfield-Viskosimeter mittels Spindel 3 bei 100 UpM. Die mit der Pigmentpaste abgetönte Dispersionsweißfarbe und der Langöl-Alkydlack zeigen keinen Rubout. Nach weiterer Lagerung über 4 Wochen bei 25 °C bleibt die Pigmentpräparation homogen und für die Verwendung als Abtönpaste geeignet.

### Beispiel 24 (Vergleichsbeispiel)

| | | |
|---|---|---|
| 50,0 | Teile | C.I. Pigment Black 11 (Bayferrox Black 316, Fa. Lanxess, Komponente (A)), |
| 8,0 | Teile | Tallölfettsäureethanolamid umgesetzt mit 15 Mol Ethylenoxid (Dispersogen^{®} MT 150, Fa. Clariant, Komponente (C)), |
| 10,0 | Teile | Glycerinethoxylat mit einem Molekulargewicht von 300 g/mol (Polyglykol 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 31,5 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 380 mPa·s, gemessen mit einem Haake Kegel-Platte-Viskosimeter bei einer Scherrate von 1/60 sec⁻¹ Die mit der Pigmentpaste abgetönte Dispersionsweißfarbe zeigt keinen Rubout, wohingegen der mit der Pigmentpaste abgetönte Langöl-Alkydlack einen starken Rubout zeigt. Nach weiterer Lagerung über 4 Wochen bei 25 °C bleibt die Pigmentpräparation homogen und für die Verwendung als Abtönpaste für wässrige Lacke geeignet.

### Beispiel 25 (Vergleichsbeispiel)

| | | |
|---|---|---|
| 50,0 | Teile | C.I. Pigment Yellow 3920 (Bayferrox Yellow 3920, Fa. Lanxess, Komponente (A)), |
| 8,0 | Teile | Oleylethoxylat mit 8 Mol Ethylenoxid (Genapol^{®} O 080, Fa. Clariant, Komponente (C)), |
| 10,0 | Teile | Glycerinethoxylat mit einem Molekulargewicht von 300 g/mol (Polyglykol 300, Fa. Clariant, Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 31,5 | Teile | Wasser (Komponente (G)) |

Die Pigmentpräparation ist nach einwöchiger Lagerung bei 60 °C pastös und hochviskos und lässt sich nicht als Abtönpaste dosieren. Die Viskosität der Pigmentpräparation ist außerhalb des Messbereiches der üblichen Messgeräte. lässt sich nicht bestimmen.

Die vorstehenden Vergleichsbeispiele zeigen die Bedeutung der erfindungsgemäßen Kombination aus den Komponenten B und C. Pigmentpräparationen mit geeigneter Viskosität lassen sich mit der erfindungsgemäßen Kombination aus den Komponenten B und C herstellen, aber nicht mit B allein. Die erfindungsgemäßen Pigmentpräparationen, die Komponenten B und C enthalten, zeigen beim Abtönen von wässrigen und lösemittelhaltigen Lacken und Farben weitgehend eine gute Verträglichkeit und keinen Rubout.

Die in den Beispielen als Komponente B verwendeten Phosphorsäureester enthielten als Gegenion M ein Wasserstoffatom.

## Patentansprüche

1. Wässrige, bindemittelfreie Pigmentpräparationen, enthaltend
(A) 1,0 bis 75,0 Gew.-% mindestens eines organischen oder anorganischen Weiß- oder Buntpigmentes oder eine Mischung verschiedener organischer und anorganischer Weiß- oder Buntpigmente,
(B) 0,01 bis 8,0 Gew.-% mindestens eines Phosphorsäureesters der Formel (IV), 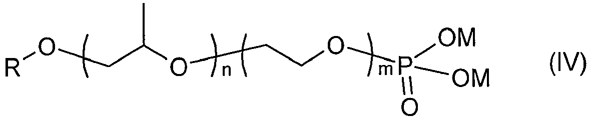 worin
R ein linearer oder verzweigter, gesättigter oder ungesättigter C₈ bis C₁₈-aliphatischer Kohlenwasserstoffrest,
M ein Wasserstoffatom oder ein Natrium-, Kalium- oder Ammoniumion,
n eine ganze Zahl von 0 bis 20 und
m eine ganze Zahl von 0 bis 20 darstellen,
(C) 0,01 bis 12,0 Gew.-% eines nichtionischen Tensides, welches ein Fettsäureethanolamidethoxylat der Formel (V), 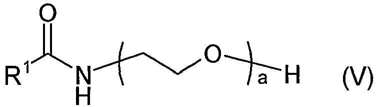 ist, worin a für eine ganze Zahl von 3 bis 50, und R¹ für C₇- bis C₂₁-Alkyl oder -Alkenyl stehen und
(G) Wasser.

2. Wässrige, bindemittelfreie Pigmentpräparation nach Anspruch 1, worin R ein Alkyl- oder Alkenylrest ist.

3. Wässrige, bindemittelfreie Pigmentpräparation nach Anspruch 1, worin m und n gleichzeitig für null stehen.

4. Wässrige, bindemittelfreie Pigmentpräparation nach einem oder mehreren der Ansprüche 1 bis 3, worin n für null und m für eine Zahl von 1 bis 20 stehen.

5. Wässrige, bindemittelfreie Pigmentpräparation nach Anspruch 1, worin Komponente (B) eine am Alkoholrest R-O zunächst mit 1 bis 20 Mol Propylenoxid und danach 1 bis 20 Mol Ethylenoxid blockweise alkoxylierte Verbindung ist.

6. Wässrige, bindemittelfreie Pigmentpräparation nach einem oder mehreren der Ansprüche 1 bis 5, worin Komponente (C) ethoxylierte C₈- bis C₂₂-Fettsäurealkanolamide mit 1 bis 100 Ethoxygruppen und einem C₂- bis C₆-Alkanolrest umfasst.

7. Wässrige, bindemittelfreie Pigmentpräparation nach Anspruch 1, enthaltend 1 bis 12 Gew.-% eines Fettsäurealkanolamidethoxylats der Formel (V).

8. Wässrige, bindemittelfreie Pigmentpräparation nach einem oder mehreren der Ansprüche 1 bis 7, enthaltend 1 bis 7 Gew.-% eines Phosphorsäureesters der Formel (IV).

9. Wässrige, bindemittelfreie Pigmentpräparation nach einem oder mehreren der Ansprüche 1 bis 7, enthaltend 10 bis 75 Gew.-% Wasser.

10. Wässrige, bindemittelfreie Pigmentpräparation nach einem oder mehreren der Ansprüche 1 bis 9, welche eine Viskosität von 10 bis 10.000 mPas, bestimmt mit einem Kegel-Platte Viskosimeter bei einer Scherrate von 1/60 sec⁻¹, aufweist.

11. Wässrige, bindemittelfreie Pigmentpräparationen nach einem oder mehreren der Ansprüche 1 bis 10, enthaltend
(D) 0,01 - 8,0 Gew.-% Tonmineralverdicker ausgewählt aus natürlichen oder alkalisch aktivierten Montmorrilonit-Schichtsilikatmineralien.

12. Wässrige, bindemittelfreie Pigmentpräparationen nach einem oder mehreren der Ansprüche 1 bis 11, enthaltend
(E) 0,01 - 20,0 Gew.-% anorganische Füllstoffe.

13. Wässrige, bindemittelfreie Pigmentpräparationen nach einem oder mehreren der Ansprüche 1 bis 12, enthaltend
(F) 0,01 bis 30 Gew.-% weitere, für die Herstellung von wässrigen, bindemittelfreien Pigmentpräparationen übliche Hilfsmittel ausgewählt aus Netzmitteln, Feuchthaltemitteln, Lösemitteln, Entschäumern, Rheologieadditiven, Konservierungsmitteln, Puffersubstanzen und pH-Regulatoren.

14. Wässrige, bindemittelfreie Pigmentpräparation nach Anspruch 13, enthaltend bis zu 15 Gew.-% mindestens eines Feuchthalte- oder Lösemittels, ausgewählt aus Glykolethern mit 200 bis 20.000 g/mol zahlenmittlerem Molekulargewicht.

15. Wässrige, bindemittelfreie Pigmentpräparation nach Anspruch 13 und/oder 14, enthaltend bis zu 2 Gew.-% Entschäumer.

16. Wässrige, bindemittelfreie Pigmentpräparation nach einem oder mehreren der Ansprüche 13 bis 15, enthaltend bis zu 1 Gew.-% eines Topfkonservierungsmittels.

17. Verwendung einer wässrigen, bindemittelfreien Pigmentpräparation nach einem oder mehreren der Ansprüche 1 bis 16 zum Einfärben von makromolekularen Materialien, Beschichtungsstoffen, Lacken und Farben, und ihre Verwendung zum Bedrucken von zweidimensionalen Flächengebilden.

## Claims

1. An aqueous, binder-free pigment preparation comprising
(A) 1.0 to 75.0 wt% of at least one organic or inorganic white or chromatic pigment or a mixture of different organic and inorganic white or chromatic pigments,
(B) 0.01 to 8.0 wt% of at least one phosphoric ester of the formula (IV), 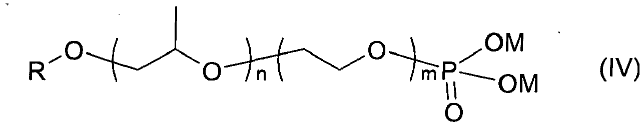 in which
R is a linear or branched, saturated or unsaturated C₈ to C₁₈ aliphatic hydrocarbon radical,
M is a hydrogen atom or a sodium, potassium, or ammonium ion,
n is an integer from 0 to 20, and
m is an integer from 0 to 20,
(C) 0.01 to 12.0 wt% of a nonionic surfactant, which is a fatty acid ethanolamide ethoxylate of the formula (V), 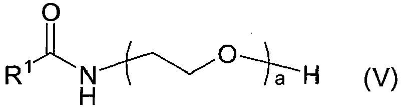 in which a is an integer from 3 to 50 and R¹ is C₇ to C₂₁ alkyl or alkenyl, and
(G) water.

2. The aqueous, binder-free pigment preparation as claimed in claim 1, wherein R is an alkyl or alkenyl radical.

3. The aqueous, binder-free pigment preparation as claimed in claim 1, wherein m and n are simultaneously zero.

4. The aqueous, binder-free pigment preparation as claimed in one or more of claims 1 to 3, wherein n is zero and m is a number from 1 to 20.

5. The aqueous, binder-free pigment preparation as claimed in claim 1, wherein component (B) is a compound alkoxylated blockwise on the alcohol residue R-O first with 1 to 20 mol of propylene oxide and then with 1 to 20 mol of ethylene oxide.

6. The aqueous, binder-free pigment preparation as claimed in one or more of claims 1 to 5, wherein component (C) comprises ethoxylated C₈ to C₂₂ fatty acid alkanolamides having 1 to 100 ethoxy groups and a C₂ to C₆ alkanol radical.

7. The aqueous, binder-free pigment preparation as claimed in claim 1, comprising 1 to 12 wt% of a fatty acid alkanolamide ethoxylate of the formula (V).

8. The aqueous, binder-free pigment preparation as claimed in one or more of claims 1 to 7, comprising 1 to 7 wt% of a phosphoric ester of the formula (IV).

9. The aqueous, binder-free pigment preparation as claimed in one or more of claims 1 to 7, comprising 10 to 75 wt% of water.

10. The aqueous, binder-free pigment preparation as claimed in one or more of claims 1 to 9, which has a viscosity of 10 to 10 000 mPas, determined with a cone/plate viscometer at a shear rate of 1/60 sec⁻¹.

11. The aqueous, binder-free pigment preparation as claimed in one or more of claims 1 to 10, comprising
(D) 0.01 - 8.0 wt% of clay mineral thickeners selected from natural or alkaliactivated montmorillonite phyllosilicate minerals.

12. The aqueous, binder-free pigment preparation as claimed in one or more of claims 1 to 11, comprising
(E) 0.01 - 20.0 wt% of inorganic fillers.

13. The aqueous, binder-free pigment preparation as claimed in one or more of claims 1 to 12, comprising
(F) 0.01 to 30 wt% of other auxiliaries customary for producing aqueous, binder-free pigment preparations and selected from wetting agents, moisture retainers, solvents, defoamers, rheological additives, preservatives, buffer substances, and pH regulators.

14. The aqueous, binder-free pigment preparation as claimed in claim 13, comprising up to 15 wt% of at least one moisture retainer or solvent, selected from glycol ethers having 200 to 20 000 g/mol number-average molecular weight.

15. The aqueous, binder-free pigment preparation as claimed in claim 13 and/or 14, comprising up to 2 wt% of defoamers.

16. The aqueous, binder-free pigment preparation as claimed in one or more of claims 13 to 15, comprising up to 1 wt% of an in-can preservative.

17. The use of an aqueous, binder-free pigment preparation as claimed in one or more of claims 1 to 16 for coloring macromolecular materials, coating materials, paints, and inks, and the use thereof for printing two-dimensional sheetlike structures.

## Revendications

1. Préparations pigmentaires aqueuses sans liant, contenant :
(A) 1,0 à 75,0 % en poids d'au moins un pigment blanc ou coloré organique ou inorganique ou d'un mélange de différents pigments blancs ou colorés organiques et inorganiques,
(B) 0,01 à 8,0 % en poids d'au moins un ester de l'acide phosphorique de formule (IV) 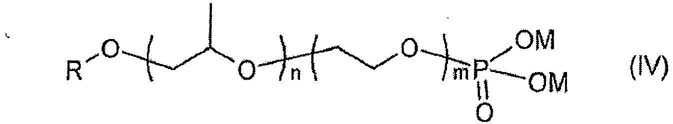 dans laquelle
R représente un radical hydrocarboné aliphatique en C₈ à C₁₈ linéaire ou ramifié, saturé ou insaturé,
M représente un atome d'hydrogène ou un ion sodium, potassium ou ammonium,
n représente un nombre entier de 0 à 20, et
m représente un nombre entier de 0 à 20,
(C) 0,01 à 12,0 % en poids d'un tensioactif non ionique, qui est un éthoxylate d'amide d'éthanol et d'acide gras de formule (V) 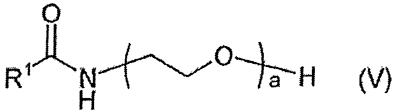 dans laquelle a représente un nombre entier de 3 à 50, et R¹ représente alkyle ou alcényle en C₇ à C₂₁, et
(G) de l'eau.

2. Préparation pigmentaire aqueuse sans liant selon la revendication 1, dans laquelle R est un radical alkyle ou alcényle.

3. Préparation pigmentaire aqueuse sans liant selon la revendication 1, dans laquelle m et n représentent simultanément zéro.

4. Préparation pigmentaire aqueuse sans liant selon une ou plusieurs des revendications 1 à 3, dans laquelle n représente zéro et m représente un nombre de 1 à 20.

5. Préparation pigmentaire aqueuse sans liant selon la revendication 1, dans laquelle le composant (B) est un composé alcoxylé séquentiellement sur le radical alcool R-O tout d'abord avec 1 à 20 moles d'oxyde de propylène, puis 1 à 20 moles d'oxyde d'éthylène.

6. Préparation pigmentaire aqueuse sans liant selon une ou plusieurs des revendications 1 à 5, dans laquelle le composant (C) comprend des amides d'alcanol et d'acide gras en C₈ à C₂₂ éthoxylés avec 1 à 100 groupes éthoxy et un radical alcanol en C₂ à C₆.

7. Préparation pigmentaire aqueuse sans liant selon la revendication 1, contenant 1 à 12 % en poids d'un éthoxylate d'amide d'alcanol et d'acide gras de formule (V).

8. Préparation pigmentaire aqueuse sans liant selon une ou plusieurs des revendications 1 à 7, contenant 1 à 7 % en poids d'un ester de l'acide phosphorique de formule (IV).

9. Préparation pigmentaire aqueuse sans liant selon une ou plusieurs des revendications 1 à 7, contenant 10 à 75 % en poids d'eau.

10. Préparation pigmentaire aqueuse sans liant selon une ou plusieurs des revendications 1 à 9, qui présente une viscosité de 10 à 10 000 mPas, déterminée avec un viscosimètre à cône et plaque à un taux de cisaillement de 1/60 s⁻¹.

11. Préparations pigmentaires aqueuses sans liant selon une ou plusieurs des revendications 1 à 10, contenant :
(D) 0,01 à 8,0 % en poids d'un épaississant minéral argileux choisi parmi les minéraux phyllosilicatés de montmorillonite naturels ou activés alcaliniquement.

12. Préparations pigmentaires aqueuses sans liant selon une ou plusieurs des revendications 1 à 11, contenant :
(E) 0,01 à 20,0 % en poids de charges inorganiques.

13. Préparations pigmentaires aqueuses sans liant selon une ou plusieurs des revendications 1 à 12, contenant :
(F) 0,01 à 30 % en poids d'autres adjuvants usuels pour la fabrication de préparations pigmentaires aqueuses sans liant, choisis parmi les agents mouillants, les agents de rétention de l'humidité, les solvants, les antimousses, les additifs rhéologiques, les conservateurs, les substances tampons et les régulateurs de pH.

14. Préparation pigmentaire aqueuse sans liant selon la revendication 13, contenant jusqu'à 15 % en poids d'au moins un agent de rétention de l'humidité ou un solvant, choisi parmi les éthers de glycol ayant un poids moléculaire moyen en nombre de 200 à 20 000 g/mol.

15. Préparation pigmentaire aqueuse sans liant selon la revendication 13 et/ou 14, contenant jusqu'à 2 % en poids d'antimousses.

16. Préparation pigmentaire aqueuse sans liant selon une ou plusieurs des revendications 13 à 15, contenant jusqu'à 1 % en poids d'un conservateur en pot.

17. Utilisation d'une préparation pigmentaire aqueuse sans liant selon une ou plusieurs des revendications 1 à 16 pour la coloration de matériaux macromoléculaires, d'agents de revêtement, de vernis et de peintures, et son utilisation pour l'impression de structures plates bidimensionnelles.
